# EUROPÄISCHE PATENTANMELDUNG

(11) **EP 1 326 188 A2**
(43) Veröffentlichungstag der Anmeldung: **09.07.2003**
(21) Anmeldenummer: 02019404.9
(22) Anmeldetag: 30.08.2002
(51) Int. Cl.: G06F 17/60

(54) **Verfahren und System zur Ermittlung von infolge der Nutzung einer Anlage anfallenden Nutzungsgebühren**

(30) Priorität: 03.11.2001 DE 10154112
(71) Anmelder: Phoenix Contact GmbH & Co. KG, 32825 Blomberg (DE)
(72) Erfinder: Bibelhausen, Volker, Dipl.-Ing., 32760 Detmold (DE)

(57) **Zusammenfassung**

Die Erfindung betrifft die Ermittlung von infolge der Nutzung einer Anlage durch einen Anlagenbetreiber anfallenden Nutzungsgebühren für wenigstens eine durch einen Anbieter bereitgestellte Anlagenkomponente. Aufgabe der Erfindung ist es, einen Weg aufzuzeigen, mit welchem derartige Nutzungsgebühren auf einfache Weise ermittelt werden können, ohne Gefahr laufen zu müssen, produktionsinterne Daten preisgeben zu müssen und gleichzeitig die notwendigen Leistungen des Anlagenbetreibers so gering wie möglich gehalten werden. Die Erfindung schlägt hierzu vor, der Anlagenkomponente zuordenbaren Nutzungsdaten unter Verwendung einer mit der Anlage in Verbindung stehenden ersten Datenverarbeitungseinrichtung (1, 9) zu erfassen, die erfassten Nutzungsdaten durch die erste Datenverarbeitungseinrichtung (1, 9) an eine auf Anbieterseite angeordnete zweite Datenverarbeitungseinrichtung (12, 13, 14) zu übertragen Nutzungsgebühren in funktionaler Abhängigkeit der übertragenen Nutzungsdaten unter Verwendung der zweiten Datenverarbeitungseinrichtung (12, 13, 14) zu ermitteln.

## Beschreibung

Die Erfindung betrifft ein Verfahren sowie ein System zur Ermittlung von infolge der Nutzung einer Anlage durch einen Anlagenbetreiber anfallenden Nutzungsgebühren für wenigstens eine durch einen Anbieter bereitgestellte Anlagenkomponente.

Bekanntermaßen verleihen Zulieferanten von Maschinen oder Werkzeuge diese an Kunden. Häufig bilden derartige Maschinen oder Werkzeuge einzelne Komponenten von einer durch den Kunden betriebenen Anlage, wie beispielsweise im Bereich der Automatisierungstechnik, Energieverteilung, Gebäudesteuerung und/oder Automobilindustrie.

Die Nutzung der Maschinen bzw. Werkzeuge durch den Kunden ist somit im Falle eines Anlagenbetreibers unmittelbarer Bestandteil des Produktions- oder Betriebsprozesses basierend auf der jeweiligen Anlage. Für die Nutzung der Anlagenkomponenten kann dem Betreiber, d.h. dem Kunden eine von der jeweiligen Nutzung abhängige Gebühr in Rechnung gestellt werden, wobei die einzelnen Anlagenkomponenten Eigentum des Lieferanten bleiben, oder vom Kunden anteilig gekauft sind, so dass beispielsweise mit der Nutzungsgebühr die Erneuerung einzelner Anlagenkomponenten abgedeckt ist.

Wird die jeweilige Anlagenkomponenten-spezifische Nutzung beispielsweise durch geeignete Zähler zur Registrierung von gefertigten Stückzahlen und/oder durch entsprechend angepasste Sensoren oder Aktoren erfasst, ist der Anbieter auf solchen Daten basierend grundsätzlich in Lage eine von der jeweiligen Nutzung abhängige Gebühr in Rechnung zu stellen.

Zur Übertragung von anlagenspezifischen Daten zwischen räumlich voneinander getrennten Anwendungen bzw. Vorrichtungen, sind insbesondere in Bereichen der Automatisierungstechnik, der Energieverteilung und/oder Gebäudesteuerung bereits Verfahren und Systeme bekannt.

So betrifft die DE-C-199 04 331 die Übertragung von Daten über das Internet, wobei von einem Client aus über eine Internetverbindung mittels erster und zweiter Verbindungsanforderungen ein erster und zweiter Übertragungskanal an einen Internetserver eines Automatisierungssystems aufgebaut werden, die zum zeitlich voneinander unabhängigen, bidirektionalen Senden und Empfangen von Nutzdaten zwischen dem Client und dem Internetserver über Internet vorgesehen sind. Darüber hinaus wird eine zeitlich unbegrenzte Nutzungsdauer der Übertragungskanäle derart sichergestellt, dass zur Erhaltung der Übertragungskanäle auch beim Nichtvorhandensein von Nutzdaten Scheindaten übertragen werden.

Durch eine derartige bidirektional ausgebildete Verbindung können jedoch auch von Seiten des Client, d.h. von extern Automatisierungssystem-spezifische Parameter verändert und somit das Automatisierungssystem fernüberwacht werden, bzw. spezifische Daten, die beispielsweise fertigungstechnisches Wissen beinhalten, abgerufen werden. Folglich ist für zahlreiche Anwender bzw. Anlagenbetreiber ein derartiges Verfahren bzw. System mit gravierenden Nachteilen verbunden, da häufig ein Hineinschauen in betriebsinterne Datensätze nicht erwünscht und somit nicht geduldet wird.

Die EP-A-0 964 325 betrifft die Unterhaltung von Feldeinrichtungen, wobei Status- und/oder Diagnosedaten innerhalb eines Anlagenprozesses über eine Kommunikationsschnittstelle gesammelt und hierauf basierend zunächst Zustands- oder Ereignisdaten bzw. -meldungen, wie z.B. Alarm oder Fehlermeldungen generiert werden, die anschließend einer anderen Anwendung, wie beispielsweise einer zur Überwachung geeigneten Software oder für eine andere Bestimmung übertragen werden.

Aufgabe der Erfindung ist es, einen Weg aufzuzeigen, mit welchem infolge der Nutzung einer Anlage durch einen Anlagenbetreiber anfallende Nutzungsgebühren für durch einen Anbieter bereitgestellte Anlagenkomponenten auf einfache Weise ermittelt werden können, ohne Gefahr laufen zu müssen, produktionsinterne Daten preisgeben zu müssen und gleichzeitig die notwendigen Leistungen des Anlagenbetreibers so gering wie möglich gehalten werden.

Die erfindungsgemäße Lösung der Aufgabe ist durch ein Verfahren mit den Merkmalen des Anspruchs 1 bzw. durch ein System mit den Merkmalen des Anspruchs 10 gegeben.

Vorteilhafte und/oder bevorzugte Ausführungsformen bzw. Weiterbildungen sind Gegenstand der jeweiligen Unteransprüche.

Erfindungsgemäß ist somit zur Ermittlung von infolge der Nutzung einer Anlage durch einen Anlagenbetreiber anfallende Nutzungsgebühren für wenigstens eine durch wenigstens einen Anbieter bereitgestellte Komponente der Anlage vorgesehen, unter Verwendung einer mit der Anlage in Verbindung stehenden ersten Datenverarbeitungseinrichtung der spezifischen Anlagenkomponente zuordenbare Nutzungsdaten zu erfassen, die erfassten Nutzungsdaten durch die erste Datenverarbeitungseinrichtung an eine auf der jeweiligen Anbieterseite angeordnete zweite Datenverarbeitungseinrichtung, vorzugsweise nach jeweils auswählbaren Zeitintervallen, zu übertragen und unter Verwendung der zweiten Datenverarbeitungseinrichtung die Nutzungsgebühren in funktionaler Abhängigkeit der übertragenen Nutzungsdaten zu ermitteln.

Von Vorteil hierbei ist, dass erfindungsgemäß aus der Anwendung heraus, d.h. während des Betreibens der Anlagen Nutzungsdaten generiert und an den Anbieter zur Abrechnungsaufbereitung gesendet werden. Da hierbei lediglich das Datenaufkommen dem Anbieter übertragen wird, welches dieser für die Abrechnung bzw. zum Ermitteln der Nutzungsgebühren benötigt, sind produktionsinterne Daten, die fertigungstechnisches Wissen oder Produktionsstückzahlen preisgeben würden, dann nicht direkt für den Anbieter nachvollziehbar.

Da in bevorzugter Weise ferner zum Übertragen der Nutzungsdaten eine Datenübertragungsverbindung lediglich von der ersten Datenverarbeitungseinrichtung in Richtung der zweiten Datenverarbeitungseinrichtung aufgebaut wird, also ein bidirektionales Senden und Empfangen verhindert ist, muss der Anlagenbetreiber nicht befürchten, dass produktionsinterne Daten preisgegeben werden bzw. der Produktions- und/oder Betriebsprozess von außen einsehbar oder manipulierbar ist. Vielmehr ist es sichergestellt, dass einem Anbieter von Anlagenkomponenten jeweils nur das Datenaufkommen übertragen wird, welches dieser zur Ermittlung von Nutzungsgebühren benötigt.

In bevorzugter Weise ist ferner vorgesehen, dass als Nutzungsdaten insbesondere auf die Anlagenkomponenten abnutzungswirkende Daten erfasst werden. Hierfür eignen sich insbesondere Informationen über die Anzahl von Impulsen, über vorherrschende Temperaturen, auf einzelne Komponenten einwirkende Gewichte oder zu fassende Volumen, zu überbrückende Längen, zu leistende Umdrehungen, die anfallenden Betriebsstunden und entsprechend die Ausfallzeiten, ggfs. zählbare Stückzahlen oder zu bewältigende Flüssigkeitsdurchflüsse und/oder die Anzahl von gesetzten Schweißpunkten.

Von Vorteil ist hierdurch, dass sich nicht nur präzise Nut zungsgebühren anhand tatsächlich angefallener Nutzungen auf der Anbieterseite ermitteln lassen, sondern darüber hinaus Verschleiß- und/oder Diagnosedaten aus den übertragenen Nutzungsdaten auf der Anbieterseite gewonnen werden können, so dass Informationen über notwendige Wartungen zur Gewährleistung der jeweils anlagenspezifischen Nutzung selbständig und kurzfristig vom Anbieter gewonnen werden können, ohne dass der Anlagenbetreiber hierfür Sorge tragen muss.

Nach einer weiteren bevorzugten Ausführung sieht die Erfindung vor, dass die erste und/oder die zweite Datenverarbeitungseinrichtung jeweils einem betriebsinternen Netzwerk zuordenbar sind und/oder die erste und/oder die zweite Datenverarbeitungseinrichtung ein netzwerkfähiges Gateway umfassen, so dass in praktischer Weiterbildung das Aufbauen der Datenübertragungsverbindung von der ersten Datenverarbeitungseinrichtung in Richtung der zweiten Datenverarbeitungseinrichtung unter Nutzung eines Netzwerks, insbesondere dem Internet erfolgt.

Praktischerweise fungiert somit die der Anlage zugeordnete Datenverarbeitungseinrichtung als Server, welcher die notwendigen Daten in weiterer vorteilhafter Ausführung selbständig in vordefinierten Zeitintervallen überträgt und/oder auf eine entsprechende von der zweiten Datenverarbeitungseinrichtung zuvor an den Server übermittelten Anforderung bereitstellt. Mit anderen Worten befindet sich somit die Server-Seite zweckmäßigerweise beim Anlagenbetreiber und die Client-Seite beim Anbieter. Über das Netzwerk sendet der Server die notwendigen Nutzungsdaten zum Client, welcher diese Daten vorzugsweise sammelt und zyklisch eine auf den ermittelten Nutzungsgebühren basierte Rechnung für den Anlagenbetreiber generiert.

In besonders praktischer Weiterbildung sieht die Erfindung darüber hinaus vor, dass auch von verschiedenen Anbietern bereitgestellte Anlagenkomponenten in Bezug auf deren jeweils zuordenbaren Nutzungsdaten erfasst werden und die erfassten Nutzungsdaten durch die erste Datenverarbeitungseinrichtung Anbieter-spezifisch an auf der jeweiligen Anbieterseite angeordnete zweite Datenverarbeitungseinrichtungen überträgt.

Da in der Regel ein Anlagenbetreiber seine verschiedenen Komponenten, wie beispielsweise Roboter, Förderbänder und/oder diverse Sensoren bzw. Aktoren von verschiedenen Anbietern bezieht, hat dies insbesondere in einem solchen Fall insgesamt den Vorteil, dass das Investitionsrisiko zu großen Teilen dem bzw. den Anbietern obliegt. Die Anlagenbetreiber insbesondere von großen und kostenintensiven Produktionsanlagen, wie beispielsweise die Automobilhersteller können somit deren Investitionen als im wesentlichen rein variable Kosten auf produzierte Stückzahlen umlegen, so dass große Investitionen auf mehrere Anbieter umverteilt werden.

Insbesondere für den Fall, dass Anlagenkomponenten von mehreren, unterschiedlichen Anbietern bezogen werden und somit Nutzungsgebühren an verschiedene Anbieter übermittelt werden müssen, sieht die Erfindung zweckmäßigerweise vor, dass die erste Datenverarbeitungseinrichtung eine Einrichtung zum Zwischenspeichern und/oder Ordnen von erfassten Nutzdaten umfasst.

Die Erfindung wird nachfolgend anhand eines Ausführungsbeispiels unter Bezugnahme auf die beiliegende Zeichnung näher beschrieben. In der Zeichnung zeigt:

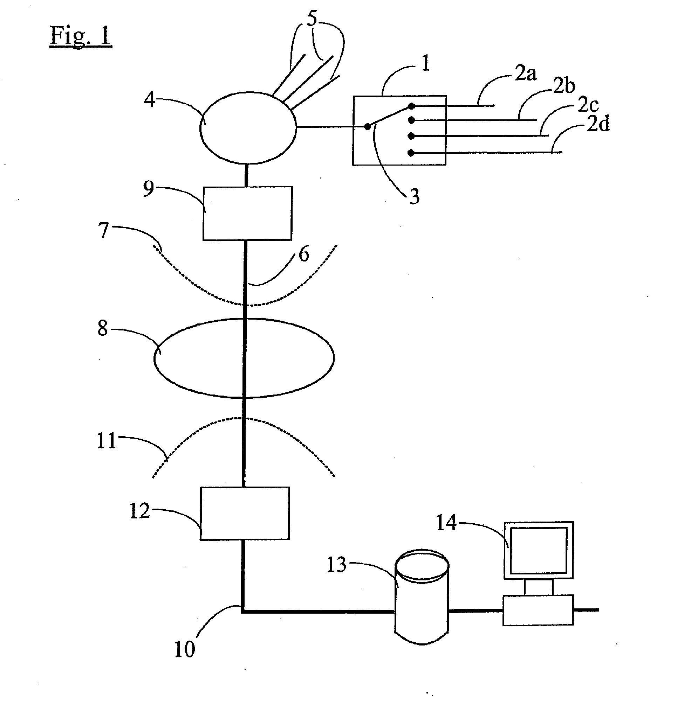

- Fig. 1: eine stark vereinfachte, schematische Prinzipskizze eines beispielhaften erfindungsgemäßen Systems zur Ermittlung von infolge der Nutzung einer Anlage anfallenden Nutzungsgebühren.

Nachfolgend wird auf Fig. 1 Bezug genommen, welche ein bevorzugtes Ausführungsbeispiel eines erfindungsgemäßen Systems zur Ermittlung von für einen Anlagenbetreiber anfallenden Gebühren für die Nutzung von durch einen Anbieter bereitgestellte Anlagenkomponenten.

Für die nachfolgende Beschreibung wird somit davon ausgegangen, dass der Anbieter dem Anlagenbetreiber eine oder mehrere Anlagenkomponenten geliefert hat, wobei die Komponente Eigentum des Anbieters bleibt oder ggfs. teilweise vom Anlagenbetreiber gekauft worden ist. Unter Zugrundelegung des vorliegenden Ausführungsbeispiels ist ferner je nach Vertrag eine Nutzungsgebühr basierend auf insbesondere einer abnutzungswirkenden Nutzung der Anlagenkomponente zwischen dem Anbieter und dem Anlagenbetreiber vereinbart worden.

Die in der Prinzipskizze gemäß Fig. 1 nicht dargestellte Anlage kann im wesentlichen jede beliebige Produktions- oder Betriebsanlage sein, und insbesondere eine Anlage sein, die in der Automatisierungstechnik, Energieverteilung, Gebäudesteuerung und/oder der Automobilindustrie angesiedelt ist. Je nach spezifischer Anlage, d.h. je nachdem ob der mittels der Anlage durchgeführte Prozess einer Überwachung, einer Verteilung insbesondere von Energie, einer Produktion oder Montage und/oder einem sonstigen Betrieb dient, umfasst die Anlage folglich Produktions- und/oder Werkzeugmaschinen, Förderbänder, Roboter, Regler, Stellglieder, Zähler und/oder je nach Anforderung entsprechend angepasste Sensoren und/oder Aktoren.

Mittels einer mit der Anlage in Verbindung stehenden Datenverarbeitungseinrichtung werden aus dem Produktionsoder Betriebsprozess anfallende Daten erfasst. Diese umfasst zweckmäßigerweise ein intelligentes Gerät 1, wie beispielsweise eine Steuerung, die mit den jeweiligen Anlagenkomponenten zugeordneten Sensoren, Aktoren und/oder anderen Aufnehmereinrichtungen verbunden bzw. verbindbar ist.

In Fig. 1 sind über Verbindungswege 2a bis 2d mit der Steuerung nicht dargestellte Aufnehmereinrichtungen verbunden, die jeweils spezifische Größen aufnehmen, die eine zu bezahlende Abnutzung der jeweiligen Anlagenkomponente oder eines bestimmten Anlagenteils verursachen oder repräsentieren.

Das dargestellte intelligente Gerät 1 umfasst im vorliegenden Ausführungsbeispiel eine Auswahleinrichtung 3, mit welcher jeweils ein Aufnehmer während des laufenden Anlagenprozesses über die Verbindungen 2a bis 2d auswählbar anschaltbar ist. Es sei jedoch darauf hingewiesen, dass das intelligente Gerät 1 beispielsweise auch eine parallele Schnittstelle umfassen kann, so dass es gleichzeitig mit mehreren Aufnehmereinrichtungen verbunden sein kann.

Beispielsweise ist über die Verbindung 2a eine Zähleinrichtung mit dem Gerät 1 gekoppelt, welche die Umdrehungen eines bestimmten Motors zählt. Die Bezugsziffer 2b kennzeichnet die Verbindung zu einem Thermostat, welches während eines bestimmten Produktionsprozesses bei einer Anlagenkomponente auftretende Temperaturen erfasst. Ferner führen die Verbindungsleitungen 2c und 2d vom intelligenten Gerät zu entsprechend ausgebildeten Aufnehmern zur Aufnahme eines Flüssigkeitsdurchflusses bzw. zur Erfassung von gesetzten Schweißpunkten durch ein entsprechendes Werkzeug oder eine entsprechende Werkzeugmaschine. Weitere, auf Maschinenkomponenten abnutzungswirkende Daten können beispielsweise Informationen über die Anzahl von Impulsen, über beispielsweise Förderbänder belastende Gewichte, über anfallende Volumina, Längen, Betriebsstunden, Maschinenausfallzeiten und/oder Stückzahlen beinhalten.

Die zu messenden oder zu zählenden Größen bzw. Daten werden zweckmäßigerweise mittels des intelligenten Geräts 1 protokolliert bzw. zwischengespeichert und ggfs., wie an späterer Stelle beschrieben, nach bestimmten vorgebbaren Kriterien geordnet.

Im vorliegenden Ausführungsbeispiel ist die Steuerung 1 ferner mit einem Bussystem 4 verbunden, welches im vorliegenden Beispiel Teil eines der Anlage zugeordneten Netzwerks darstellt. Über das Netzwerk sind weitere, nicht dargestellte, der Steuerung 1 entsprechende oder andere Geräte, Komponenten oder Einheiten über Verbindungswege 5 mit der Anlage gekoppelt.

Das Bussystem 4 und infolge die Steuerung 1 sowie die zu betreibende Anlage ist ferner an ein internes Kommunikationsnetz 6, also einem Internet des Anlagenbetreibers angeschlossen. Das interne Kommunikationsnetz 6 des Anlagenbetreibers ist wiederum mittels einer durch die Linie 7 angedeuteten sogenannten Firewall eines nicht dargestellten Firewall-Rechners nach außen hin schützend umgeben.

Mit dem Bezugszeichen 8 ist ein externes Kommunikationsnetzwerk, wie insbesondere das als Internet weltweite Datenkommunikationsnetz gekennzeichnet, zu welchem auf für den Fachmann an sich bekannte Weise vom Intranet 6 eine Verbindung aufbaubar ist, um Daten vom Intranet 6 ins externe Netzwerk 8 zu übertragen bzw. Daten aus dem externen Netzwerk 8 im Intranet 6 zu empfangen.

Das der Beschreibung zugrundeliegende Ausführungsbeispiel umfasst ferner auf der Seite des Anlagenbetreibers, d.h. auf der der Anlage zugeordneten Anwenderseite einen Protokollumsetzer 9, wie beispielsweise ein Gateway, um ggfs. dafür Sorge zu tragen, dass Daten zwischen zwei unterschiedlichen Netzwerksystemen im Falle unterschiedlicher verwendeter Netzwerkprotokolle durch Umsetzung des einen Netzwerkformates in das Format des anderen Netzwerkes ausgetauscht werden können. Ferner kann mittels eines Gateway insbesondere eine Wegewahl zu einem ausgewählten Empfänger aber auch die Steuerung des Datenflusses sowie die Fehlerbehandlung bei defektem Übertragungsrahmen bzw. das Aufsplitten von zu übertragenden Informationen in jeweils benötigte Paketgrößen eines Zielnetzwerkes durchgeführt werden.

Ferner ist in Fig. 1 die Seite eines Anbieters, also eines Lieferanten wenigstens einer Anlagenkomponente schematisch dargestellt. Diese umfasst bevorzugterweise gleichermaßen ein firmeninternes Netzwerk 10, welches mittels einer Firewall 11 nach außen hin geschützt ist. Darüber hinaus befindet sich in bevorzugter Ausführung ein dem Protokollumsetzer 9 im wesentlichen gleichwirkender Protokollumsetzer 12. An das firmeninterne Netzwerk 10 des Anbieters ist ferner eine, eine Datenbank 13 sowie eine Rechnereinheit 14 umfassende Datenverarbeitungseinrichtung angeschlossen. Darüber hinaus können weitere nicht dargestellte Einrichtungen über das Intranet 10 miteinander vernetzt sein.

Zur Ermittlung der Nutzungsgebühr, basierend auf der tatsächlichen Nutzung einschließlich beispielsweise eines dadurch in Folge eintretenden Verschleißes der Komponente werden nun mit dem erfindungsgemäßen System die zur Erhebung der Nutzungsgebühr relevanten Daten bzw. Informationen zunächst auf der Seite des Anlagenbetreibers, wie vorstehend beschrieben, über das intelligente Gerät 1 erfasst.

Zu diesem Zeitpunkt, d.h. während der Ermittlung der variablen Abnutzungsdaten während der Betriebslaufzeit ist eine Verbindung zwischen dem Anlagenbetreiber und dem Anbieter, also insbesondere zwischen den Netzwerken 6 und 10 nicht notwendig.

Nach Aufbau einer Datenübertragungsverbindung ausgehend vom Netzwerk 6, stellt das intelligente Gerät bzw. die Steuerung 1, mit welcher die Daten erfasst wurden, diese Daten selbständig derart bereit, dass der Anbieter darauf zugreifen kann. Mit anderen Worten, befindet sich die Server-Seite beim Anlagenbetreiber und die Client-Seite beim Anbieter. Es ist jedoch auch möglich, dass von Seiten des Anbieters aus zuvor eine entsprechende Anforderung zur Übertragung eines Datensatzes dem Anlagenbetreiber übermittelt wird, woraufhin dieser die entsprechenden Daten dem Anmelder übermittelt.

Je nach spezifischer Ausbildung des Netzwerkes 8 und/oder der firmeneigenen Netze 6 und 10 werden die Daten mittels der beim Anlagenbetreiber als Server eingerichteten Datenverarbeitungseinrichtung in dem Netzwerk 8 bereitgestellt, so dass der Anbieter diese dort abrufen kann oder es wird eine Verbindung von der Anlagenbetreiberseite bis zur Anbieterseite aufgebaut.

Gemäß Fig. 1, ist im vorliegenden Beispiel eine Datenübertragungsverbindung über das externe Netzwerk 8 in Richtung des Netzwerkes 10 aufgebaut, wobei je nach spezifischer Ausbildung die Bereitstellung der Daten unter Nutzung des Protokollumsetzers 8 und/oder der Zugriff auf die Daten bzw. der Empfang der Daten unter Nutzung des Protokollumsetzers 12 erfolgt.

Nach Erhalt der Daten auf Seiten des Anbieters werden diese in der Datenbank 13 gesammelt und nach einem in der Rechnereinheit 14 implementierten Abrechnungsschlüssel zyklisch eine Belastung bzw. Rechnung an den Anwender generiert.

Mit anderen Worten, werden aus der Anwendung heraus, also im wesentlichen während des Betriebs der Anlage, die Daten auf Seiten des Anlagenbetreibers erfasst und selbständig an den Anbieter zur Abrechnungsaufbereitung gesendet oder, wie vorstehend bereits erwähnt, nach einer entsprechenden Aufforderung durch den Anbieter. Eine Verschlüsselung der Dateninhalte selber ist regelmäßig nicht notwendig, da das erfindungsgemäße Verfahren weder eine Übermittlung von Geheimkennzahlen oder eine Bezahlung über Kreditkarten vorsieht.

Wie häufig das zur Ermittlung der Nutzungsgebühr notwendige Datenaufkommen dem Anbieter mitgeteilt wird bzw. in welchen Zeitabständen, beispielsweise einmal im Monat, dem Anbieter der Datensatz übertragen wird und/oder welche Informationen dieser Datensatz umfasst ist hierbei variabel bzw. frei vereinbar. Ferner wird zur Datenübertragung selbst zweckmäßigerweise ein zeitlich befristeter uni-direktionaler Verbindungsaufbau vorgenommen wird, so dass ein Verändern von anlagenspezifischen Parametern durch den Anbieter, wie beispielsweise Sollwerten, ausgeschlossen ist.

Folglich sind ohne die Zustimmung bzw. Kenntnis des Anlagenbetreibers produktionsinterne Daten, die fertigungstechnisches Wissen oder Produktionsstückzahlen preisgeben würden, für den Anbieter nicht zugänglich. Ein Hineinschauen in betriebsinterne Datensätze durch einen externen Zulieferer bzw. Anbieter, welches häufig von Anlagenbetreibern nicht geduldet wird, ist somit bei dem erfindungsgemäßen Verfahren im wesentlichen ausgeschlossen.

Im Rahmen der Erfindung liegt es ferner, mehreren Anbietern die jeweiligen, den von diesen bereitgestellten Anlagenkomponenten zugehörigen Nutzungsdaten zu übertragen. Hierzu ist in praktischer Weise das Gerät 1 derart ausgebildet, dass erfasste Nutzdaten anbieterspezifisch vorsortiert bzw. geordnet werden, um diese dem jeweiligen Anbieter zum vereinbarten Zeitpunkt nach entsprechend zielgerichtetem Verbindungsaufbau zu übertragen.

Die Erfindung bietet somit insbesondere für Betreiber komplexer und kostenintensiver Anlagen, wie beispielsweise Produktionsanlagen von Automobilherstellern die Möglichkeit, große Investitionen als im wesentlichen rein variable Kosten auf produzierte Stückzahlen umzulegen und/oder auf mehrere Anbieter umzuverteilen, also dass das Investitionsrisiko großenteils beim Anbieter verbleibt.

Darüber hinaus ist vorgesehen, dass aus den vorstehend genannten Daten auch Verschleißinformationen oder Diagnoseinformationen auf Seiten des Anbieters mittels Datenverarbeitungseinrichtungen 12, 13, 14 gewonnen werden können, die frühzeitig auf notwendige Wartungen der vom Anbieter bereitgestellten Anlagenkomponenten hinweisen.

Das Verfahren gemäß der Erfindung gewährleistet somit, dass ein Anbieter von Anlagenteilen oder Maschinen, ohne direkten Zugriff auf die Anlage zu haben, präzise Informationen über die Nutzung bzw. über den Verschleiß der bereitgestellten Komponenten erhält, so dass infolge eine vereinfachte Diagnose ermöglicht ist. Ist ein Verschleiß frühzeitig erkannt, können diese verschleißbedingten Wartungs- oder Reparaturarbeiten beim Anlagenbetreiber eingeplant und beispielsweise während routinemäßig anstehenden Wartungsarbeiten mit durchgeführt werden.

## Patentansprüche

1. Verfahren zur Ermittlung von infolge der Nutzung einer Anlage durch einen Anlagenbetreiber anfallenden Nutzungsgebühren für wenigstens eine durch wenigstens einen Anbieter bereitgestellte Komponente der Anlage, mit folgenden Schritten:
- Erfassen von der Anlagenkomponente zuordenbaren, Nutzungsdaten unter Verwendung einer mit der Anlage in Verbindung stehenden ersten Datenverarbeitungseinrichtung (1, 9),
- Übertragen der erfassten Nutzungsdaten durch die erste Datenverarbeitungseinrichtung (1, 9) an eine auf Anbieterseite angeordnete zweite Datenverarbeitungseinrichtung (12, 13, 14), und
- Ermitteln von Nutzungsgebühren in funktionaler Abhängigkeit der übertragenen Nutzungsdaten unter Verwendung der zweiten Datenverarbeitungseinrichtung (12, 13, 14).

2. Verfahren nach Anspruch 1, ferner **dadurch gekennzeichnet, dass** als Nutzungsdaten auf die Anlagenkomponente abnutzungswirkende Daten erfasst werden.

3. Verfahren nach einem der Ansprüche 1 oder 2, ferner **dadurch gekennzeichnet, dass** als Nutzungsdaten Informationen über die Anzahl von Impulsen, Temperaturen, Gewichte, Volumen, Längen, Umdrehungen, Betriebsstunden, Maschinenausfallzeiten, Stückzahlen, Flüssigkeitsdurchflüsse und/oder die Anzahl von Schweißpunkten erfasst werden.

4. Verfahren nach einem der vorstehenden Ansprüche, ferner **dadurch gekennzeichnet, dass** zum Übertragen der Nutzungsdaten eine Datenübertragungsverbindung von der ersten Datenverarbeitungseinrichtung (1, 9) in Richtung der zweiten Datenverarbeitungseinrichtung (12, 13, 14) aufgebaut wird.

5. Verfahren nach Anspruch 4, ferner **dadurch gekennzeichnet, dass** das Aufbauen der Datenübertragungsverbindung unter Nutzung eines Netzwerks (8), insbesondere dem Internet, an welches die erste Datenverarbeitungseinrichtung (1, 9) und die zweite Datenverarbeitungseinrichtung (12, 13, 14) koppelbar sind, erfolgt.

6. Verfahren nach einem der vorstehenden Ansprüche, ferner **dadurch gekennzeichnet, dass** das Übertragen der Nutzungsdaten in vordefinierten Zeitintervallen erfolgt und/oder unter Ansprechen auf eine mittels der zweiten Datenverarbeitungseinrichtung (12, 13, 14) zuvor an die erste Datenverarbeitungseinrichtung (1, 9) übermittelten Anforderung.

7. Verfahren nach einem der vorstehenden Ansprüche, bei welchem mittels der zweiten Datenverarbeitungseinrichtung (12, 13, 14) zyklisch eine auf den Nutzungsgebühren basierte Rechnung für den Anlagenbetreiber generiert wird.

8. Verfahren nach einem der vorstehenden Ansprüche, ferner **dadurch gekennzeichnet, dass** mittels der zweiten Datenverarbeitungseinrichtung (12, 13, 14) Verschleißinformationen oder Diagnoseinformationen aus den übertragenen Nutzungsdaten gewonnen werden.

9. Verfahren nach einem der vorgehenden Ansprüche, bei welchem zu von verschiedenen Anbietern bereitgestellten Anlagenkomponenten jeweils zuordenbare Nutzungsdaten erfasst werden, und erfasste Nutzungsdaten durch die erste Datenverarbeitungseinrichtung (1, 9) Anbieter-spezifisch an auf der jeweiligen Anbieterseite angeordnete zweite Datenverarbeitungseinrichtungen (12, 13, 14) überträgt.

10. System zur Ermittlung von infolge der Nutzung einer Anlage durch einen Anlagenbetreiber anfallenden Nutzungsgebühren für wenigstens eine durch wenigstens einen Anbieter bereitgestellte Komponente der Anlage, umfassend:
- eine mit der Anlage in Verbindung stehende erste Datenverarbeitungseinrichtung (1, 9), mit wenigstens eine Einrichtung (1) zum Erfassen von der Anlagenkomponente zuordenbaren Nutzungsdaten und
- eine auf Anbieterseite angeordnete zweite Datenverarbeitungseinrichtung (12, 13, 14), wobei die erste Datenverarbeitungseinrichtung (1, 9) zum Übertragen der erfassten Nutzungsdaten an die zweite Datenverarbeitungseinrichtung (12, 13, 14) und die zweite Datenverarbeitungseinrichtung (12, 13, 14) zum Ermitteln von Nutzungsgebühren in funktionaler Abhängigkeit der übertragenen Nutzungsdaten ausgebildet ist.

11. System nach Anspruch 10, ferner **dadurch gekennzeichnet, dass** der wenigstens einen Einrichtung (1) Aufnehmereinrichtungen, insbesondere Sensoren und/oder Aktoren, zur Erfassung von auf die Anlagenkomponente abnutzungswirkende Daten zugeordnet (2a, 2b, 2c, 2d) sind.

12. System nach Anspruch 10 oder 11, ferner **dadurch gekennzeichnet, dass** die erste Datenverarbeitungseinrichtung (1, 9) Mittel zum Aufbauen einer Datenübertragungsverbindung in Richtung der zweiten Datenverarbeitungseinrichtung (12, 13, 14) umfasst, und die zweite Datenverarbeitungseinrichtung (12, 13, 14) Mittel zum Empfangen von über die Datenübertragungsverbindung bereitgestellten Nutzungsdaten umfasst.

13. System nach einem der Ansprüche 10 bis 12, ferner **dadurch gekennzeichnet, dass** die erste (1, 9) und/oder zweite (12, 13, 14) Datenverarbeitungseinrichtung einem Netzwerk (6, 10) zuordenbar ist und/oder ein netzwerkfähiges Gateway (9, 12) umfasst.

14. System nach einem der Ansprüche 10 bis 13, ferner **dadurch gekennzeichnet, dass** die erste (1, 9) und zweite Datenverarbeitungseinrichtung (12, 13, 14) an ein gemeinsames Netzwerk (8), insbesondere dem Internet, koppelbar sind.

15. System nach einem der Ansprüche 10 bis 14, ferner **dadurch gekennzeichnet, dass** die erste Datenverarbeitungseinrichtung (1, 9) zum selbständigen Übertragen der Nutzungsdaten in vordefinierten Zeitintervallen ausgebildet ist.

16. System nach einem der Ansprüche 10 bis 15, ferner **dadurch gekennzeichnet, dass** die erste Datenverarbeitungseinrichtung (1, 9) zum Übertragen der Nutzungsdaten unter Ansprechen auf eine mittels der zweiten Datenverarbeitungseinrichtung (12, 13, 14) zuvor an die erste Datenverarbeitungseinrichtung (1, 9) übermittelten Anforderung ausgebildet ist.

17. System nach einem der Ansprüche 10 bis 16, ferner **dadurch gekennzeichnet, dass** die zweite Datenverarbeitungseinrichtung (12, 13, 14) zyklisch eine auf den Nutzungsgebühren basierte Rechnung für den Anlagenbetreiber generiert.

18. System nach einem der Ansprüche 10 bis 17, ferner **dadurch gekennzeichnet, dass** die zweite Datenverarbeitungseinrichtung (12, 13, 14) zum Gewinnen von Verschleiß- und/oder Diagnoseinformationen aus den übertragenen Nutzungsdaten ausgebildet ist.

19. System nach einem der Ansprüche 10 bis 18, ferner **dadurch gekennzeichnet, dass** die erste Datenverarbeitungseinrichtung (1, 9) eine Einrichtung zum Zwischenspeichern und/oder Ordnen von erfassten Nutzdaten umfasst.
